# DEMANDE DE BREVET EUROPEEN

(11) **EP 1 684 404 A1**
(43) Date de publication de la demande: **26.07.2006**
(21) Numéro de dépôt: 05405032.3
(22) Date de dépôt: 24.01.2005
(51) Int. Cl.: H02M 1/00

(54) **Circuit convertisseur**

(71) Demandeur: Haute Ecole Arc, 2002 Neuchâtel (CH)
(72) Inventeur: Perotto, Jean-Félix, 2013 Colombier (CH); Dellea, Mario, 2206 Les Geneveys-sur-Coffrane (CH)
(74) Mandataire: GLN

(57) **Abrégé**

L'invention concerne un circuit électronique destiné à être connecté à une source (10) de faible tension Us, qui peut être inférieure à la tension de seuil des transistors du circuit proprement dit, comprenant un bloc de conversion de puissance (24) pour l'alimentation d'une charge (42).

Selon l'invention, le circuit comprend, en outre, un bloc de démarrage (14) intercalé entre ladite source (10) et le bloc de conversion de puissance (24) et comprenant un premier réservoir (22) emmagasinant de l'énergie et la restituant audit bloc (24).

## Description

La présente invention se rapporte au domaine de l'électronique. Elle concerne, plus particulièrement, un circuit convertisseur de tension continu(DC)-continu(DC) conçu pour alimenter un circuit électronique à partir d'une source dont la tension peut être inférieure à la tension de seuil de ses propres transistors.

Ainsi, lorsqu'un circuit est alimenté, par exemple à partir d'une seule photodiode dont la tension à vide est d'environ 0,5V, il est nécessaire d'augmenter cette tension car elle est trop faible pour alimenter les circuits électroniques usuels.

Pour ce faire, une première solution consiste à augmenter la tension avec laquelle on veut travailler en mettant plusieurs sources en série. Notamment, au lieu d'utiliser une seule photodiode, on emploie un réseau de photodiodes montées en série. Cependant, un tel réseau présente plusieurs inconvénients. Outre un coût relativement important, il nécessite de bien répartir la lumière sur chaque diode. Ainsi, si la lumière arrive sous la forme d'un faisceau ponctuel (laser), il faut répartir les photodiodes autour d'un centre géométrique et diriger précisément le faisceau lumineux incident sur ce centre. Sinon, l'énergie récoltée sera limitée par la photodiode la plus faiblement éclairée. Ce centrage complique considérablement l'utilisation d'une telle source photoélectrique.

La présente invention a pour objet un circuit convertisseur de puissance peu coûteux, capable d'être amorcé de manière autonome à partir d'une très faible tension qui peut être inférieure à la tension de seuil de ses propres transistors. Un autre objectif de l'invention est d'obtenir un circuit à très faible consommation d'énergie de sorte qu'il puisse démarrer à partir de la tension à vide de la source.

De façon plus générale, l'invention concerne un circuit électronique destiné à être connecté à une source de faible tension Us, comprenant un bloc de conversion de puissance destiné à alimenter une charge sous une tension suffisante. Selon l'invention, il comprend, en outre, un bloc de démarrage intercalé entre la source et le bloc de conversion de puissance et comprenant un premier réservoir emmagasinant l'énergie et la restituant au bloc de conversion de puissance pour permettre son fonctionnement.

Avantageusement, le bloc de démarrage comprend, en outre, un convertisseur de gain k1 relié audit premier réservoir de manière à ce que qu'il emmagasine de l'énergie sous une tension U1=k1*Us.

De préférence, le réservoir est un condensateur et le convertisseur est de type capacitif. Le montage est du type connu de l'homme du métier sous le nom de pompe de charge.

Le bloc de conversion de puissance comprend un deuxième convertisseur de gain k2 et un second réservoir emmagasinant de l'énergie sous une tension U2=k2*Us et la restituant à la charge.

Le second réservoir est, de préférence, un condensateur et le deuxième convertisseur est de type inductif. Le montage est du type connu de l'homme du métier sous le nom de convertisseur boost.

Eventuellement, une diode de retour connectée entre le deuxième et le premier réservoir, permet, dès que la tension de sortie du deuxième convertisseur est suffisante, d'autoalimenter l'horloge du deuxième convertisseur à partir de la tension de sortie de ce deuxième convertisseur.

En variante, le circuit comprend une source auxiliaire reliée au bloc de conversion de puissance, se substituant temporairement à la première source et au bloc de démarrage.

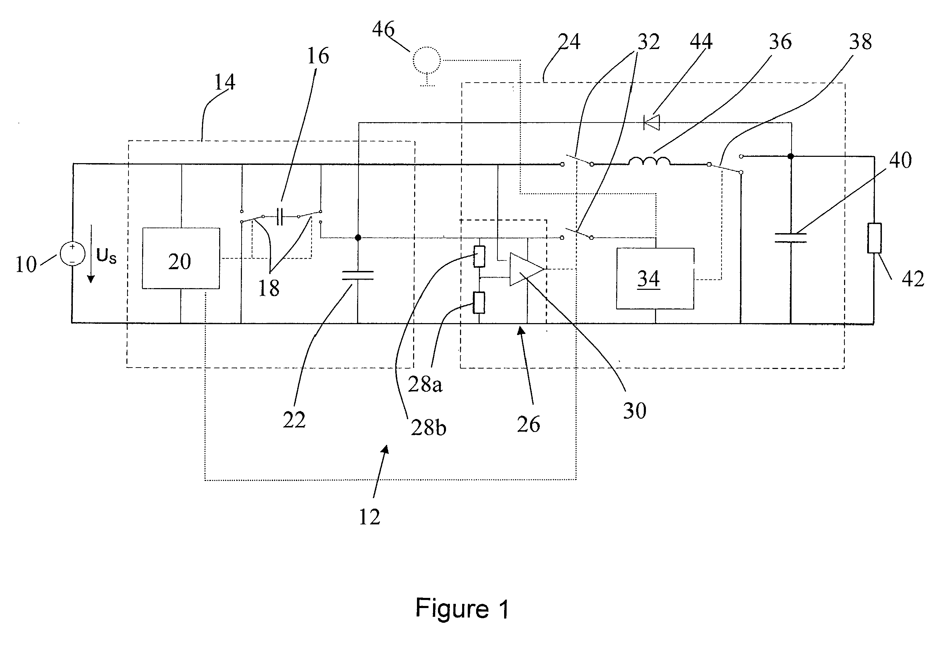

D'autres détails apparaîtront à la lecture de la description qui suit, faite en regard de l'unique figure annexée, illustrant schématiquement le circuit selon l'invention.

On a représenté sur le dessin une source de tension 10, fournissant un signal de faible tension Us, reliée à un circuit convertisseur 12 selon l'invention.

Connecté à la source 10, le convertisseur 12 comprend un premier bloc de démarrage 14 comportant un convertisseur de type capacitif de gain k1. A titre d'exemple, le schéma représente un doubleur (k1=2) formé d'un condensateur 16 et de deux commutateurs 18 qui permettent de connecter le condensateur 16 en parallèle ou en série à la source 10. Un générateur d'horloge 20, du type connu de l'homme du métier, mais capable de fonctionner sous une tension d'alimentation inférieure à la tension de seuil des transistors qui le composent, commande les commutateurs 18.

Le condensateur 16 se charge lorsqu'il est connecté en parallèle à la source 10 puis, quand sa tension est égale à Us, le générateur d'horloge 20 bascule les commutateurs, de manière à ce qu'aux bornes de la source 10 et du condensateur 16, cette fois branchés en série, on obtienne une tension U1 de valeur k1*Us, c'est-à-dire égale à 2Us.

La tension U1 se trouve aux bornes d'un premier réservoir 22, avantageusement formé par un condensateur. Sa fonction est d'emmagasiner de l'énergie à une tension voisine de 2Us, pour ensuite la restituer, comme expliqué ci-après.

A la suite du bloc 14, le circuit convertisseur 12 comprend un second bloc de conversion de puissance 24. Celui-ci est doté d'un comparateur de tension 26 constitué, classiquement et à titre d'exemple, de deux résistances 28a et 28b, de valeurs respectives R1 et R2 et d'un amplificateur opérationnel 30. Les résistances sont connectées en parallèle au condensateur 22 et l'amplificateur 30 est relié, d'une part, à la source 10 et, d'autre part, en un noeud situé entre les résistances 28a et 28b. Les valeurs de R1 et R2 déterminent la fraction de la tension du condensateur 22 aux bornes respectives des résistances 28a et 28b.

Typiquement, les valeurs R1 et R2 sont égales. Ainsi, lorsque le condensateur 22 a atteint sa charge et que la tension à ses bornes est de 2Us, la tension aux bornes de la résistance 28a vaut 2Us*R1/(R1+R2), soit Us. L'amplificateur 30 détecte que cette valeur est égale à la tension de la source 10 et connecte, par l'intermédiaire de deux interrupteurs 32 et d'un deuxième générateur d'horloge 34, une bobine 36 jouant le rôle d'un convertisseur inductif de gain k2, typiquement égal à 10. Cette bobine permet d'augmenter la tension fournie par la source 10. La phase de démarrage étant terminée, les commutateurs 18 sont arrêtés, par exemple dans la position indiquée sur le dessin. La bobine 36 fournit donc une tension de valeur k2*Us, c'est-à-dire égale à 10Us.

La bobine 36 est également reliée, par l'intermédiaire d'un interrupteur 38 également commandé par le générateur d'horloge 34, à un deuxième réservoir avantageusement formé par un condensateur 40. Lorsqu'il est connecté à la bobine 36, il emmagasine donc de l'énergie sous une tension voisine de 10Us.

Lorsque le condensateur 40 est relié à des éléments consommant du courant, ici symbolisés par une résistance de charge 42, il restitue l'énergie emmagasinée sous forme d'un courant sous une tension maximale U2 égale à 10Us.

L'horloge 34 du second convertisseur est autoalimentée, via une diode 44, par la tension de sortie présente aux bornes du condensateur 40. Ainsi, une fois que le premier convertisseur 14 a fourni une tension suffisante pour le fonctionnement du second convertisseur 24, la conversion DC-DC est amorcée et permet d'alimenter la charge même si la tension de la source 10 devient très faible.

Une variante est proposée pour les cas où, avant démarrage, la tension Us fournie par la source est tellement faible qu'elle ne permet pas d'activer la phase de démarrage. Une source auxiliaire 46, représentée en pointillé, est disposée de manière à alimenter le générateur d'horloge 34 et à activer la phase de démarrage. Elle ne sert que de source d'alimentation pendant cette phase, puis elle est déconnectée et la première source 10 est reliée au deuxième bloc 24. La source auxiliaire 46 n'est donc que faiblement utilisée et ne fournit, globalement, que peu d'énergie. Il peut donc s'agir d'une pile, même pour des applications où il pourrait être difficile de la changer, car elle aura une longue durée de vie.

Ainsi est obtenu un circuit de conversion de tension fonctionnant à partir d'une source de très faible tension, consommant très peu d'énergie et ne mettant en oeuvre que des composants extrêmement simples et peu coûteux.

Les éléments convertisseurs des premier et deuxième blocs n'ont été décrits qu'à titre indicatif. L'homme du métier pourra en adapter d'autres selon l'application qu'il vise, sans sortir du cadre de l'invention. De même, la fonction de réservoir peut aussi être assurée par des super-condensateurs ou, éventuellement, par des accumulateurs, remplaçant l'un et/ou l'autre des condensateurs 22 et 40.

## Revendications

1. Circuit électronique destiné à être connecté à une source (10) de faible tension Us, qui peut être inférieure à la tension de seuil des transistors du circuit proprement dit, comprenant un bloc de conversion de puissance (24) pour l'alimentation d'une charge (42), **caractérisé en ce qu'**il comprend, en outre, un bloc de démarrage (14) intercalé entre ladite source (10) et le bloc de conversion de puissance (24) et comprenant un premier réservoir (22) emmagasinant de l'énergie et la restituant audit bloc (24).

2. Circuit selon la revendication 1, **caractérisé en ce que** ledit bloc de démarrage comprend, en outre, un convertisseur de gain k1 relié audit premier réservoir (22) de manière à ce que qu'il emmagasine de l'énergie sous une tension U1=k1*Us.

3. Circuit selon l'une des revendications 1 et 2, **caractérisé en ce que** ledit réservoir est un condensateur (22).

4. Circuit selon l'une des revendications 2 et 3, **caractérisé en ce que** ledit convertisseur est de type capacitif.

5. Circuit selon l'une des revendications 1 à 4, **caractérisé en ce que** ledit bloc de conversion de puissance (24) comprend un deuxième convertisseur de gain k2 et un second réservoir (40) emmagasinant de l'énergie à une tension U2=k2*Us et la restituant à ladite charge.

6. Circuit selon la revendication 5, **caractérisé en ce que** ledit second réservoir est un condensateur (40).

7. Circuit selon l'une des revendications 5 et 6, **caractérisé en ce que** ledit deuxième convertisseur est un de type inductif (36).

8. Circuit selon l'une des revendications 1 à 7, **caractérisé en ce qu'**il comprend une diode de retour connectée entre les premier (22) et deuxième (40) condensateurs réservoirs, pour autoalimenter l'horloge du second convertisseur.

9. Circuit selon l'une des revendications 1 à 8, **caractérisé en ce qu'**il comprend une source auxiliaire (46) reliée audit bloc de conversion de puissance, se substituant temporairement à ladite première source (10) et audit bloc de démarrage (14).
